# EUROPÄISCHE PATENTANMELDUNG

(11) **EP 4 675 064 A1**
(43) Veröffentlichungstag der Anmeldung: **07.01.2026**
(21) Anmeldenummer: 25186651.3
(22) Anmeldetag: 01.07.2025
(51) Int. Cl.: E04H 4/16, B25F 5/02, F04D 13/06, F04D 13/08, A47L 1/02, A47L 7/00, A47L 9/00, B25F 5/00

(54) **ELEKTROGERÄT**

(30) Priorität: 05.07.2024 DE 102024119227
(71) Anmelder: Einhell Germany AG, 94405 Landau / Isar (DE)
(72) Erfinder: Alves de Lima, Anthonny, 94405 Landau a. d. Isar (DE)
(74) Vertreter: Canzler & Bergmeier Patentanwälte Partnerschaft mbB

(57) **Zusammenfassung**

Die Erfindung betrifft ein Elektrogerät (1), insbesondere Reinigungseinheit, vorzugsweise Poolreiniger, mit zumindest einem Akkugehäuse (4), das einen Innenraum (5) zur Aufnahme zumindest eines Akkus (6) umgibt, wobei das Akkugehäuse (4) ein Schale (7) und einen Deckel (8) umfasst, wobei der Deckel (8) zumindest teilweise von der Schale (7) getrennt werden kann, und mit zumindest einer zwischen dem Deckel (8) und Schale (7) angeordneten Abdichtvorrichtung (9), mittels der der Innenraum (5) abgedichtet werden kann, wobei die Abdichtvorrichtung (9) zumindest eine erste Abdichtanordnung (10) und eine zweite Abdichtanordnung (11) umfasst, wobei die erste und die zweite Abdichtanordnung (10) derart ausgebildet sind, dass ein erstes Abdichtelement (12) mit einer erste Presskraft (14) und ein zweites Abdichtelement (13) mit einer zweiten Presskraft (15) beaufschlagt werden kann. Ferner sind in einem bestimmungsgemäßen geschlossenen Zustand des Akkugehäuses (4) die beiden Presskräfte (14, 15) in zueinander verschiedenen Richtungen orientiert.

## Beschreibung

Die vorliegende Erfindung betrifft ein Elektrogerät, insbesondere Reinigungseinheit, vorzugsweise Poolreiniger, mit zumindest einem Akkugehäuse, das einen Innenraum zur Aufnahme zumindest eines Akkus umgibt, wobei das Akkugehäuse eine Schale und einen Deckel umfasst, wobei der Deckel zumindest teilweise von der Schale getrennt werden kann, und mit zumindest einer zwischen dem Deckel und der Schale angeordneten Abdichtvorrichtung, mittels der der Innenraum abgedichtet werden kann, wobei die Abdichtvorrichtung zumindest eine erste Abdichtanordnung und eine zweite Abdichtanordnung umfasst, wobei die erste und die zweite Abdichtanordnung derart ausgebildet sind, dass ein erstes Abdichtelement mit einer ersten Presskraft und ein zweites Abdichtelement mit einer zweiten Presskraft beaufschlagt werden kann.

Aus der US 10,487,525 B1 ist ein Elektrogerät mit zwei Abdichtungen offenbart.

Aufgabe der vorliegenden Erfindung ist es, ein Akkugehäuse effektiv abzudichten.

Die Aufgabe wird gelöst durch ein Elektrogerät mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Elektrogerät, insbesondere eine Reinigungseinheit, vorzugsweise ein Poolreiniger. Das Elektrogerät kann aber auch ein Gartengerät, ein Handwerksgerät, ein technisches Gerät oder eine Maschine sein. Beispielsweise kann es sich beim Elektrogerät um Akku-Rasenmäher, Akku-Laubbläser und Akku-Heckenscheren, sowie Handwerksgeräte wie Akku-Bohrmaschinen, Akku-Schlagschrauber und Akku-Stichsägen handeln. Auch akkubetriebene Pumpen wie Tauchpumpen, Gartenpumpen und Brunnenpumpen sind Beispiele von Elektrogeräten. Auch Akku-Rasenmäher oder Akku-Rasenmäherroboter, Akku-Outdoorleuchten und Akku-Luftkompressoren sind Beispiele von Elektrogeräten. Das Elektrogerät kann aber auch ein Akku-Staubsauger, ein Akku-Fensterreiniger oder ein Akku-Gartensauger sein.

Das Elektrogerät umfasst zumindest ein Akkugehäuse, das einen Innenraum zur Aufnahme zumindest eines Akkus umgibt. Das Akkugehäuse schützt den Akku vor äußeren Einflüssen wie Wasser und Schmutz und verhindert somit eine Zerstörung des Akkus und/oder des Elektrogeräts.

Das Akkugehäuse umfasst eine Schale und einen Deckel, wobei der Deckel zumindest teilweise von der Schale getrennt werden kann. Dies ermöglicht einen einfachen Zugang zum Innenraum, erleichtert die Wartung und den Austausch des Akkus und verbessert die Benutzerfreundlichkeit des Geräts. Beispielsweise kann der Deckel vollständig abgenommen werden. Zusätzlich oder alternativ kann der Deckel auch aufgeklappt werden.

Zudem umfasst das Elektrogerät zumindest eine zwischen dem Deckel und der Schale angeordnete Abdichtvorrichtung, mittels der der Innenraum abgedichtet werden kann. Die Abdichtung schützt den Akku vor Feuchtigkeit und Verschmutzung und gewährleistet somit die Sicherheit und Funktionsfähigkeit des Elektrogeräts.

Die Abdichtvorrichtung umfasst zumindest eine erste Abdichtanordnung und eine zweite Abdichtanordnung, wobei die erste und die zweite Abdichtanordnung derart ausgebildet sind, dass ein erstes Abdichtelement mit einer ersten Presskraft und ein zweites Abdichtelement mit einer zweiten Presskraft beaufschlagt werden kann.

Des Weiteren sind in einem bestimmungsgemäßen geschlossenen Zustand des Akkugehäuses die beiden Presskräfte in zueinander verschiedene Richtungen orientiert. Diese Ausrichtung der beiden Presskräfte sorgt für eine umfassende Abdichtung, die effektiv gegen das Eindringen von Wasser und Schmutz schützt, wodurch die Zuverlässigkeit und Langlebigkeit des Geräts erhöht werden. Durch die beiden Abdichtungen mit den Presskräften in verschiedene Richtungen kann, falls eine Abdichtung beispielsweise durch ein Verschieben des Deckels gegenüber der Schale unwirksam wird, die andere Abdichtung die Dichtheit des Akkugehäuses gewährleisten.

Gemäß einer vorteilhaften Weiterbildung der Erfindung sind die beiden Presskräfte quer zueinander orientiert. Die beiden Presskräfte können hierbei auch senkrecht zueinander orientiert sein. Dadurch wird die Effektivität der Dichtungen erhöht.

Darüber hinaus ist es vorteilhaft, wenn eine der beiden Presskräfte in einer Axialrichtung des Elektrogeräts und/oder des Akkugehäuses orientiert ist. Zusätzlich oder alternativ ist es von Vorteil, wenn die andere der beiden Presskräfte in einer Radialrichtung des Elektrogeräts und/oder des Akkugehäuses orientiert ist. Diese spezifische Ausrichtung ermöglicht eine gezielte Abdichtung entlang der Hauptbelastungsrichtungen und schützt den Innenraum des Akkugehäuses effektiv vor äußeren Einflüssen.

Es ist vorteilhaft, wenn die Presskraft der der Schale zugewandten Abdichtanordnung in Axialrichtung orientiert ist. Zusätzlich oder alternativ ist es von Vorteil, wenn die Presskraft der dem Deckel zugewandten Abdichtanordnung in Radialrichtung orientiert ist. Diese Anordnung gewährleistet eine besonders effektive Abdichtung, indem sie die Dichtungswirkung entlang der Hauptrichtungen der mechanischen Belastung optimiert.

Des Weiteren ist es vorteilhaft, wenn die erste Abdichtanordnung zur Aufnahme des ersten Abdichtelements eine erste Nut umfasst. Zusätzlich oder alternativ ist es von Vorteil, wenn die zweite Abdichtanordnung zur Aufnahme des zweiten Abdichtelements eine zweite Nut umfasst. Die Verwendung von Nuten für die Dichtungen sorgt für eine präzise Positionierung und Fixierung der Abdichtelemente, was die Dichtwirkung und die Stabilität des Systems verbessert.

In einer vorteilhaften Weiterbildung der Erfindung umfasst die erste Abdichtanordnung eine erste Anpressfläche, mittels derer die erste Presskraft auf das erste Abdichtelement ausgeübt werden kann. Zusätzlich oder alternativ ist es von Vorteil, wenn die zweite Abdichtanordnung eine zweite Anpressfläche umfasst, mittels derer die zweite Presskraft auf das zweite Abdichtelement ausgeübt werden kann. Diese Anpressflächen ermöglichen eine gezielte Ausübung der Presskräfte, was die Effektivität und die Langlebigkeit der Dichtungen erhöht. Die Anpressflächen können hierbei gerade und/oder gekrümmt, insbesondere konvex, ausgebildet sein.

Darüber hinaus ist es vorteilhaft, wenn die erste und/oder die zweite Nut in der Schale oder im Deckel angeordnet ist. Es kann auch eine Nut im Deckel und die andere in der Schale angeordnet sein. Diese Anordnung der Nuten in der Schale oder im Deckel erleichtert die Integration der Abdichtanordnungen und verbessert die Effizienz der Abdichtungsmechanismen.

Vorteilhafterweise sind die erste und/oder die zweite Anpressfläche in der Schale oder im Deckel angeordnet. Es kann auch eine Anpressfläche im Deckel und die andere in der Schale angeordnet sein. Diese Anordnung erlaubt eine optimale Nutzung des Gehäuseraums und unterstützt die strukturelle Integrität des Akkugehäuses.

Es ist vorteilhaft, wenn sich die erste und/oder die zweite Nut und/oder die erste und/oder zweite Anpressfläche in einer Umfangsrichtung zumindest teilweise, insbesondere vollständig, um die Schale und/oder den Deckel herum erstreckt. Die Umfangsanordnung sorgt für eine durchgehende und gleichmäßige Abdichtung, was die Dichtheit des gesamten Gehäuses verbessert.

**In** einer vorteilhaften Weiterbildung der Erfindung sind die beiden Anpressflächen quer, insbesondere senkrecht, zueinander orientiert, so dass jede der beiden Anpressflächen eine Presskraft ausbildet, die zueinander verschiedene Richtungen aufweist und/oder die quer, insbesondere senkrecht, zueinander orientiert sind.

Es ist vorteilhaft, wenn eine Normale einer der beiden Anpressflächen parallel zur Axialrichtung orientiert ist. Zusätzlich oder alternativ ist es von Vorteil, wenn eine Normale der anderen Anpressfläche parallel zur Radialrichtung orientiert ist. Die parallele Ausrichtung der Normalen zur Axial- bzw. Radialrichtung gewährleistet eine effektive Abdichtung, indem sie die Dichtungswirkung entlang der Hauptrichtungen der mechanischen Belastung optimiert.

Vorteilhafterweise sind die erste Abdichtanordnung und die zweite Abdichtanordnung in Axialrichtung zueinander versetzt angeordnet. Zusätzlich oder alternativ ist es von Vorteil, wenn die erste Abdichtanordnung und die zweite Abdichtanordnung in Radialrichtung zueinander versetzt angeordnet ist. Die versetzte Anordnung ermöglicht eine mehrstufige Abdichtung, die eine zusätzliche Sicherheitsbarriere gegen das Eindringen von Wasser und Schmutz bietet.

Darüber hinaus ist es vorteilhaft, wenn zwischen der ersten und der zweiten Abdichtanordnung zumindest eine Übergangsfläche angeordnet ist. Die Übergangsfläche ermöglicht eine gleichmäßige Verbindung zwischen den Dichtungsbereichen, was die Abdichtwirkung verbessert.

Gemäß einer vorteilhaften Weiterbildung der Erfindung ist die Übergangsfläche schräg zur Axial- und/oder Radialrichtung angeordnet. Hierdurch sind die erste und zweite Abdichtanordnung Axial- und/oder Radialrichtung zueinander versetzt.

In einer vorteilhaften Weiterbildung der Erfindung ist in der ersten Nut das erste Abdichtelement angeordnet. Zusätzlich oder alternativ ist es von Vorteil, wenn in der zweiten Nut das zweite Abdichtelement angeordnet ist. Die Anordnung der Abdichtelemente in den Nuten gewährleistet eine stabile Fixierung und eine effektive Abdichtung.

Vorteilhafterweise ist das erste und/oder zweite Abdichtelement ein Dichtring. Dichtringe bieten eine zuverlässige Dichtwirkung und sind langlebig, was die Wartungsfreundlichkeit und Zuverlässigkeit des Geräts erhöht. Außerdem sind die Dichtringe sehr kostengünstig und können leicht ausgetauscht werden.

Es ist vorteilhaft, wenn im Akkugehäuse zumindest ein Kontaktbereich angeordnet ist, in dem der zumindest eine Akku angeschlossen werden kann. Der Kontaktbereich ermöglicht eine sichere und zuverlässige elektrische Verbindung des Akkus zum Elektrogerät und erleichtert die Handhabung. Im Akkugehäuse können auch mehrere Kontaktbereiche angeordnet sein, um mehrere Akkus mit dem Elektrogerät zu koppeln.

Darüber hinaus ist es vorteilhaft, wenn das Elektrogerät zumindest einen Koppelbereich umfasst, an dem eine Arbeitseinheit, insbesondere ein Reinigungskopf, angekoppelt werden kann. Der Koppelbereich ermöglicht eine flexible Anpassung des Geräts an verschiedene Anwendungen, was die Vielseitigkeit und Effizienz erhöht.

Von Vorteil ist es, wenn das Elektrogerät eine Hallsensoreinheit umfasst. Mittels der Hallsensoreinheit kann ein Verschließen des Akkugehäuses ermittelt werden. Dadurch kann sichergestellt werden, dass der Deckel ordnungsgemäß verschlossen ist. Der Vorteil dieser Erkennung besteht darin, dass ungewolltes Eindringen von Wasser oder Schmutz in den Innenraum des Ackugehäuses verhindert wird, was die Lebensdauer und die Sicherheit des Ackus erhöht.

Die Hallsensoreinheit kann einen Hallsensor und zumindest ein Magnetelement umfassen. Der Hallsensor kann im Deckel und/oder in der Schale angeordnet sein. Dadurch kann der Hallsensor flexibel an unterschiedlichen Positionen im Akkugehäuse platziert werden. Der Vorteil dieser Anordnung ist die flexible und platzsparende Integration des Sensors in das Gehäuse. Das Magnetelement kann am entsprechenden Gegenstück, also am Deckel und/oder an der Schale, angeordnet sein. Dies ermöglicht eine zuverlässige Erkennung des Schließzustands, da das Magnetelement in Kontakt mit dem Hallsensor steht, wenn der Deckel geschlossen ist. Der Vorteil dieser Anordnung ist eine hohe Erkennungsgenauigkeit und eine verbesserte Betriebssicherheit.

Eine vorteilhafte Weiterentwicklung ist es, dass das Elektrogerät nicht gestartet werden kann, wenn mittels der Hallsensoreinheit erkannt wird, dass das Akkugehäuse nicht vollständig geschlossen ist. Dadurch ist das Gerät nur dann betriebsbereit, wenn das Akkugehäuse sicher und korrekt verschlossen ist. Der Vorteil liegt darin, dass potenzielle Schäden durch das Eindringen von Wasser oder Schmutz vermieden werden und die Betriebssicherheit erheblich gesteigert wird.

Vorteilhaft ist es, wenn das Elektrogerät einen Feuchtigkeitssensor umfasst. Mittels dieses Sensors kann Feuchtigkeit im Innenraum ermittelt werden. Dadurch wird eine frühzeitige Warnung bei potenziellen Wassereinbrüchen oder Kondensation im Innenraum ermöglicht. Der Vorteil liegt darin, dass der Sensor zur Vermeidung von Feuchtigkeitsschäden beiträgt, indem er die rechtzeitige Einleitung von Gegenmaßnahmen ermöglicht, was die Zuverlässigkeit und die Langlebigkeit des Elektrogeräts verbessert.

Eine vorteilhafte Weiterentwicklung besteht darin, dass das Elektrogerät abgeschaltet wird, wenn der Feuchtigkeitssensor Feuchtigkeit im Innenraum erkennt. Infolgedessen kann das Gerät in einen sicheren Zustand versetzt werden, um Schäden durch Feuchtigkeit zu vermeiden. Der Vorteil ist die Vermeidung von Kurzschlüssen und möglichen Ausfällen des Geräts, wodurch die Zuverlässigkeit und die Sicherheit erhöht werden.

Darüber hinaus ist es vorteilhaft, wenn der Deckel und/oder die Schale optisch transparent sind. Hierdurch kann der Benutzer den Innenraum des Ackugehäuses und den Zustand des zumindest einen Akkus visuell inspizieren, ohne das Gehäuse zu öffnen. Dadurch kann der Wartungsaufwand reduziert werden und der Benutzer erhält sofortigen Einblick auf den Zustand des Ackus und beispielsweise mögliche Feuchtigkeitsansammlungen, was eine schnelle und unkomplizierte Überprüfung ermöglicht.

Der transparente Deckel oder die Schale haben noch den weiteren Vorteil, dass damit Anzeigen am Akku gesehen werden können. Dies ermöglicht es dem Benutzer, den Ladezustand und andere Statusanzeigen des Akkus direkt durch den Deckel oder die Schale zu überprüfen, ohne das Gerät öffnen zu müssen. Hierdurch ist die Benutzerfreundlichkeit und Effizienz bei der Überwachung des Akkus erhöht, da wichtige Informationen auf einen Blick zugänglich sind.

Es ist vorteilhaft, wenn das Elektrogerät eine optische und/oder akustische Ausgabeeinheit umfasst. Mittels dieser Ausgabeeinheit kann ein Akkuzustand des zumindest einen Akkus ausgegeben werden. Die technische Wirkung der optischen und/oder akustischen Ausgabe-Einheit besteht darin, dass sie Echtzeitinformationen über den Akkuzustand bereitstellt, indem sie visuelle und/oder akustische Signale ausgibt. Infolgedessen kann der Benutzer frühzeitig über den Ladezustand oder eventuelle Probleme informiert werden, was eine optimale Nutzung des Akkus und eine rechtzeitige Wartung ermöglicht. Die Aktivierung der zumindest einen Ausgabeeinheit durch ein Bedienelement ermöglicht eine bedarfsgerechte Information, wodurch die Benutzerfreundlichkeit und Effizienz des Geräts gesteigert werden.

Die optische Ausgabeeinheit kann beispielsweise ein Display oder eine oder mehrere LEDs umfassen, mittels dem ein Ladezustand angezeigt werden kann. Die technische Wirkung des Displays oder der LEDs besteht darin, dass sie eine klare und gut sichtbare Anzeige des Ladezustands des Akkus bieten. Der Vorteil ist, dass der Benutzer den Zustand des Akkus schnell und einfach ablesen kann, was eine effektive Überwachung und Verwaltung der Akkuleistung ermöglicht.

Die akustische Ausgabeeinheit kann ein Lautsprecher sein, der den Ladezustand ansagt. Der Lautsprecher kann akustische Signale oder Sprachansagen ausgeben, die den Benutzer über den Ladezustand des Akkus informieren. Infolgedessen kann der Benutzer akustische Rückmeldungen erhalten, was besonders in Situationen nützlich ist, in denen visuelle Anzeigen möglicherweise nicht wahrgenommen werden können, z. B. bei starker Sonneneinstrahlung oder in dunklen Umgebungen.

Des Weiteren ist es von Vorteil, wenn das Elektrogerät eine Steuereinheit umfasst, mittels dem das Elektrogerät gesteuert werden kann. Die Steuereinheit kann hierbei vorteilhafterweise mit dem zumindest einen Akku, der Hallsensoreinheit und/oder dem Feuchtigkeitssensor verbunden sein. Die Steuereinheit kann beispielsweise das Elektrogerät erst dann starten, wenn das Akkugehäuse vollständig geschlossen ist. Zusätzlich oder alternativ kann die Steuereinheit das Elektrogerät auch abschalten, wenn Feuchtigkeit im Innenraum detektiert wird.

Weitere Vorteile der Erfindung sind in den nachfolgenden Ausführungsbeispielen beschrieben. Es zeigen:
- **Figur 1**: eine perspektivische Ansicht eines Elektrogeräts in Form eines Poolreinigers,
- **Figur 2**: eine perspektivische Ansicht auf das Akkugehäuse, das geschlossen ist,
- **Figur 3**: eine perspektivische Ansicht auf das Akkugehäuse, das geöffnet ist,
- **Figur 4**: eine perspektivische Ansicht der Abdichtvorrichtung,
- **Figur 5**: eine Schnittansicht eines Teils der Schale, des Deckels und der Abdichtvorrichtung,
- **Figur 6**: eine Schnittansicht eines Teils der Schale, des Deckels und der Abdichtvorrichtung ohne Abdichtelemente und
- **Figur 7**: eine Schnittansicht eines Teils der Schale, des Deckels sowie eine Hallsensoreinheit und einem Feuchtigkeitssensor.

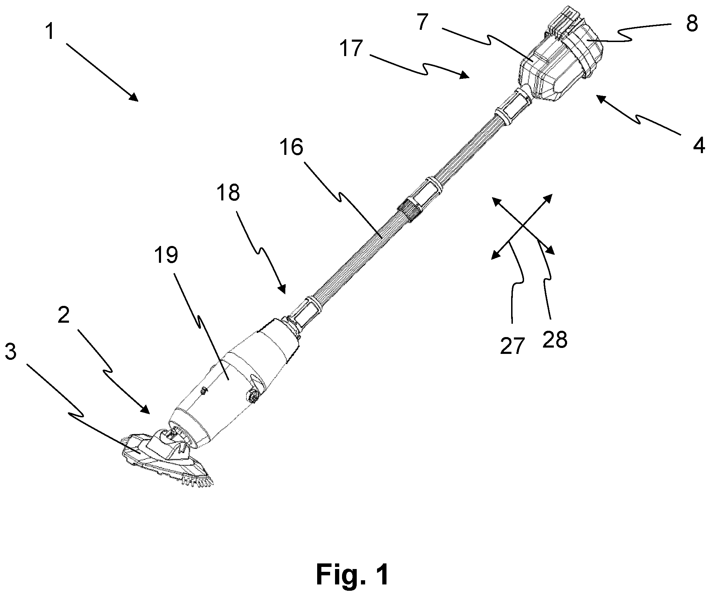

Figur 1 zeigt ein Elektrogerät 1 in Form eines Poolreinigers in einer perspektivischen Ansicht. Der hier beispielhaft gezeigte Poolreiniger als Elektrogerät 1 ist darauf ausgelegt, effizient Pools zu reinigen, und umfasst verschiedene Komponenten, die im Folgenden detailliert beschrieben werden. Im Folgenden wird die Erfindung anhand des Poolreinigers erläutert. Die Abdichtung kann aber auch für andere Elektrogeräte 1 verwendet werden. Beispielsweise bei einem Elektrorasenmäher bzw. -roboter, eine Teichpumpe, einem elektrischen Reinigungsgerät usw. Die Abdichtung ist insbesondere dort von Vorteil, wo die Gefahr besteht, dass das Akkugehäuse 4 und/oder der Akku 6 nass werden kann.

Das Elektrogerät 1 kann gemäß dem vorliegenden Ausführungsbeispiel einen Koppelbereich 2 umfassen, an dem eine Arbeitseinheit 3 angeordnet werden kann. Bei Poolreiniger kann die Arbeitseinheit 3 ein Reinigungskopf sein, mit dem eine Innenseite des Pools gereinigt werden kann.

Das in Figur 1 dargestellte Elektrogerät 1 umfasst ein Akkugehäuse 4, das für die Aufnahme mindestens eines Akkus 6 konzipiert ist. Das Akkugehäuse 4 ist so gestaltet, dass es einen Innenraum 5 aufweist, der dazu dient, den Akku 6 vor äußeren Einflüssen wie Wasser und Schmutz zu schützen. Der Akku 6 wird sicher im Innenraum 5 des Akkugehäuses 4 gelagert, wodurch seine Funktionsfähigkeit und Langlebigkeit gewährleistet werden. Dies hat den Vorteil, dass die Lebensdauer des Akkus 6 verlängert und das Risiko von Beschädigungen reduziert wird.

Wie in Figur 1 außerdem zu sehen ist, ist das Akkugehäuse 4 durch einen Deckel 8 verschlossen, der von einer Schale 7 des Akkugehäuses 4 zumindest teilweise getrennt werden kann. Diese trennbare Ausgestaltung des Gehäuses, die sowohl aus der Schale 7 als auch aus dem Deckel 8 besteht, ermöglicht einen einfachen Zugang zum Akku 6. Hierdurch kann der Akku 6 ausgetauscht und durch einen geladenen Akku 6 ersetzt werden. Der Deckel 8 kann hierbei vollständig abgenommen werden. Alternativ kann der Deckel 8, wie es bei diesem Poolreiniger der Fall ist, aufgeklappt werden, wobei er noch durch ein Drehlager 20 oder Drehgelenk mit der Schale 7 verbunden bleibt.

Zusätzlich zeigt Figur 1, dass das Elektrogerät 1 einen Stiel 16 umfasst, der eine flexible und komfortable Handhabung des Elektrogeräts 1 ermöglicht. Der Stiel 16 weist ein erstes Stielende 17 und ein zweites Stielende 18 auf. Im Bereich des ersten Stielendes 17 ist das Akkugehäuse 4 angeordnet. Im Bereich des zweiten Stielendes 18 ist der Koppelbereich 2 angeordnet.

Im Bereich des zweiten Stielendes 18 ist ferner ein Aktorgehäuse 19 angeordnet, in dem die für das Elektrogerät 1 nötigen Komponenten angeordnet sind. Beispielsweise ist darin zumindest ein Aktor zum Betreiben der Arbeitseinheit 3 angeordnet.

Ferner sind in Figur 1 eine Axialrichtung 27 und eine Radialrichtung 28 des Elektrogeräts 1 angegeben. Die Axialrichtung 27 und die Radialrichtung 28 kann aber auch auf das Akkugehäuse 4 bezogen werden.

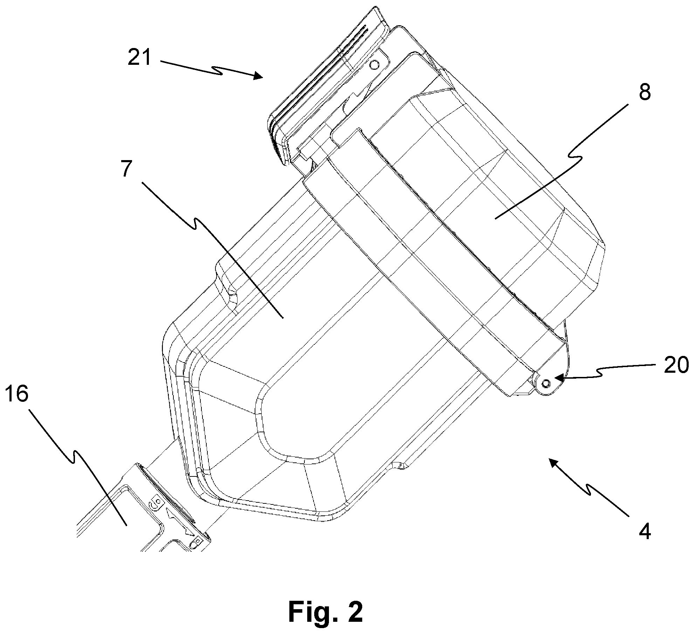

Figur 2 zeigt eine perspektivische Ansicht des Akkugehäuses 4, das in geschlossenem Zustand dargestellt ist. Diese Ansicht verdeutlicht die wesentlichen Merkmale des Akkugehäuses 4 und seiner Bestandteile, wie im Folgenden detailliert beschrieben wird.

Das in Figur 2 dargestellte Akkugehäuse 4 umfasst die Schale 7 und den Deckel 8, die gemeinsam den Innenraum 5 des Akkugehäuses 4 begrenzen. Der Deckel 8 ist in dieser Ansicht auf der Schale 7 angeordnet und gewährleistet den sicheren Verschluss des Akkugehäuses 4. Diese trennbare Gehäusekonfiguration erlaubt es, den Innenraum 5 zu öffnen und zum Austausch des Akkus 6 einfach abzunehmen. Der Deckel 8 kann hierbei von der Schale 7 entfernt oder weggeklappt werden.

Der Deckel 8 ist so gestaltet, dass er eine enge Passform zur Schale 7 gewährleistet, was zur Abdichtung des Innenraums 5 beiträgt. In Figur 2 ist ferner gezeigt, dass der Deckel 8 das Akkugehäuse 4 vollständig verschließt, wodurch der Akku 6 zuverlässig vor äußeren Einflüssen wie Wasser und Schmutz geschützt wird.

In der Figur 2 ist ebenfalls ein Drehlager 20 zu sehen. Dieses Drehlager 20 ermöglicht eine einfache Öffnung und Schließung des Deckels 8 durch eine drehbare Verbindung zur Schale 7. Mit Hilfe des Deckels 8 kann der Innenraum 5 leicht geöffnet und geschlossen werden, was den Austausch des Akkus 6 erleichtert. Durch das Drehlager 20 bzw. Drehgelenk kann das Ackugehäuse 4 aufgeklappt werden.

Gemäß Figur 2 ist das Akkugehäuse 4 außerdem mit einer Verschlusseinheit 21 ausgestattet. Diese Verschlusseinheit 21 sorgt dafür, dass der Deckel 8 sicher auf der Schale 7 gehalten wird und nicht versehentlich geöffnet werden kann. Die Verschlusseinheit 21 trägt somit zur Sicherheit und Zuverlässigkeit des gesamten Elektrogeräts 1 bei.

Das Akkugehäuse 4 ist in der vorliegenden Figur 2 geschlossen, um den Akku 6 effektiv vor äußeren Einflüssen zu schützen und eine einfache Handhabung bei der Wartung zu gewährleisten. Diese Ausgestaltung verbessert die Zuverlässigkeit und Langlebigkeit des Elektrogeräts 1 erheblich, indem sie den Akku 6 sicher und geschützt hält.

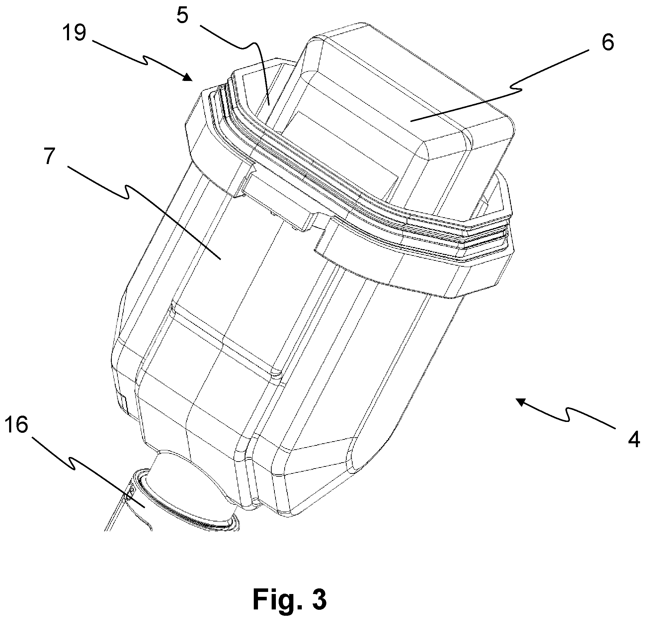

Figur 3 zeigt eine perspektivische Ansicht des Akkugehäuses 4 eines Elektrogeräts, bei der das Akkugehäuse 4 offen ist.

Der Innenraum 5 des Akkugehäuses 4 dient dazu, mindestens einen Akku 6 sicher aufzunehmen. Wie aus Figur 3 hervorgeht, schützt der Innenraum 5 den Akku 6 vor äußeren Einflüssen wie Wasser und Schmutz, was zu einer erhöhten Lebensdauer und Funktionsfähigkeit des Akkus 6 führt. Dies ist besonders vorteilhaft, da dadurch das Risiko von Beschädigungen minimiert wird und die Betriebssicherheit des Elektrogeräts 1 verbessert wird.

Das Akkugehäuse 4 ist hier geöffnet dargestellt. Der Akku 6 ist zugänglich und kann ausgetauscht werden. Der Innenraum 5 ist ebenfalls zugänglich. Der Deckel 8 ist hier nicht dargestellt.

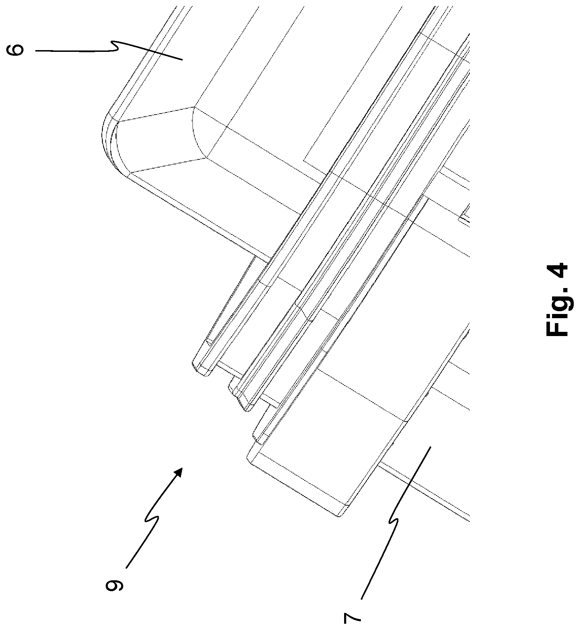

Figur 4 zeigt eine perspektivische Detailansicht eines Abschnitts des Akkugehäuses 4 des Elektrogeräts 1. Diese Ansicht zeigt eine Abdichtvorrichtung 9, die zwischen der Schale 7 und dem Deckel 8 des Akkugehäuses 4 angeordnet ist. Mit Hilfe der Abdichtvorrichtung 9 kann der Innenraum 5 gegenüber der Umgebung abgedichtet werden. Es kann damit verhindert werden, dass Wasser in den Innenraum 5 gelangt. Die Abdichtvorrichtung 9 ist hier allerdings lediglich teilweise dargestellt, da die Abdichtvorrichtung 9 Elemente aufweist, die im und/oder am Deckel 8 angeordnet sind. Die Abdichtvorrichtung 9 weist hierbei Elemente auf, die im und/oder am Deckel 8 und der Schale 7 angeordnet sind.

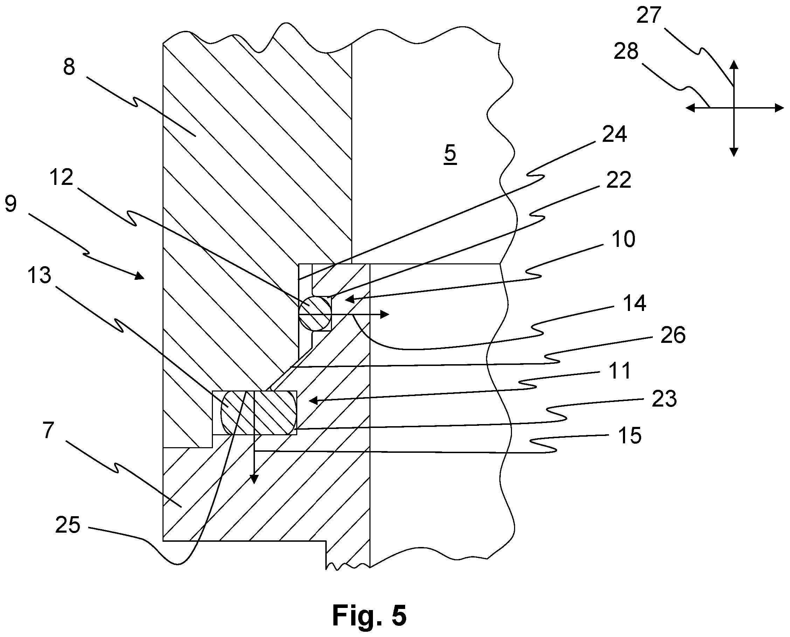

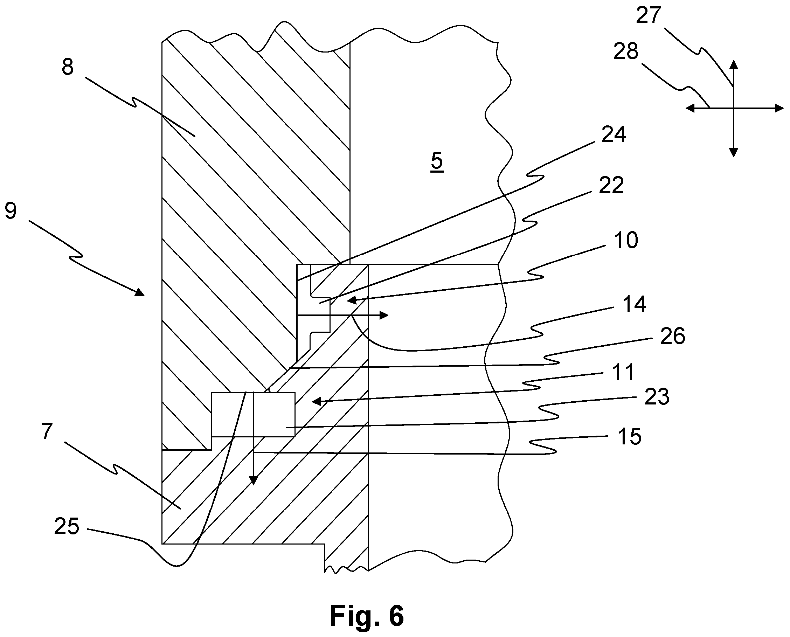

Die Figuren 5 und 6 zeigen eine detaillierte Schnittansicht des Akkugehäuses 4 eines Elektrogeräts 1. Beide Figuren 5 und 6 zeigen die Abdichtvorrichtung 9, die zwischen der Schale 7 und dem Deckel 8 des Akkugehäuses 4 angeordnet ist. Der Hauptunterschied zwischen den beiden Figuren besteht darin, dass in Figur 5 die Abdichtelemente 12 und 13 dargestellt sind, während diese in Figur 6 nicht sichtbar sind. Ansonsten sind beide Figuren 5 und 6 gleich.

Die in den Figuren 5 und 6 dargestellte Abdichtvorrichtung 9 umfasst eine erste Abdichtanordnung 10 und eine zweite Abdichtanordnung 11. Die beiden Abdichtanordnungen 10, 11 sind derart ausgebildet, dass ein erstes Abdichtelement 12 mit einer ersten Presskraft 14 und ein zweites Abdichtelement 13 mit einer zweiten Presskraft 15 beaufschlagt werden kann. Die beiden Presskräfte 14, 15 weisen, wie hier gezeigt ist, verschiedene Richtungen auf. Gemäß dem vorliegenden Ausführungsbeispiel sind beide Presskräfte 14, 15 quer, insbesondere senkrecht, zueinander orientiert.

Gemäß dem vorliegenden Ausführungsbeispiel ist die erste Presskraft 14 in Radialrichtung 28 und die zweite Presskraft 15 in Axialrichtung 27 orientiert.

Des Weiteren umfasst die erste Abdichtanordnung 10 eine erste Nut 22, die im vorliegenden Ausführungsbeispiel in der Schale 7 des Akkugehäuses 4 angeordnet ist. In Figur 5 ist zu sehen, dass das erste Abdichtelement 12 in diese Nut 22 angeordnet ist, wodurch es fest und sicher positioniert wird. Die erste Abdichtanordnung 10 umfasst eine erste Anpressfläche 24, die die Presskraft 14 auf das Abdichtelement 12 ausübt.

Die zweite Abdichtanordnung 11 ist ebenfalls in beiden Figuren gezeigt und weist eine zweite Nut 23 auf, die im vorliegenden Ausführungsbeispiel in der Schale 7 angeordnet ist. In der zweiten Nut 23 ist das zweite Abdichtelement 13 angeordnet. Die zweite Abdichtanordnung 11 umfasst eine zweite Anpressfläche 25, die die zweite Presskraft 15 auf das Abdichtelement 13 ausbildet. Diese Ausrichtung der zweiten Presskraft 15 sorgt dafür, dass das Abdichtelement 13 fest gegen die Nut 23 gedrückt wird, wodurch eine zuverlässige Abdichtung erzielt wird.

Die beiden Anpressflächen 24, 25 sind im hier gezeigten Ausführungsbeispiel geradlinig oder flach ausgebildet. Zusätzlich oder alternativ können die beiden Anpressflächen 24, 25 aus gekrümmt, beispielsweise konkav und/oder konvex, ausgebildet sein. Die beiden Anpressflächen 24, 25 sind im hier gezeigten Ausführungsbeispiel im und/oder am Deckel 8 angeordnet.

Durch das Verschließen des Deckels 8, insbesondere durch den Verschluss 21, werden die beiden Anpressflächen 24, 25 auf die Abdichtelemente 12, 13 gepresst.

Durch die beiden Abdichtanordnungen 10, 11, die die beiden in verschiedene Richtungen wirkenden Presskräfte 14, 15 ausbildet, kann die Abdichtwirkung der Abdichtvorrichtung 9 verbessert werden. Die doppelte Abdichtung ist zum einen eine redundante Abdichtung. Zum anderen wirken beiden Abdichtungen in verschiedene Richtungen, so dass beispielsweise bei einer Verschiebung des Deckels 8 gegenüber der Schale 7 zwar eine Abdichtung unwirksam werden kann, dafür aber noch die andere Abdichtung wirksam bleibt.

Zusätzlich wird in den Figuren 5 und 6 die Übergangsfläche 26 zwischen der ersten und der zweiten Abdichtanordnung 10 und 11 dargestellt. Diese Übergangsfläche 26 verläuft im hier gezeigten Ausführungsbeispiel schräg zur Axialrichtung 27 und/oder zur Radialrichtung 28.

In Figur 6 sind die Abdichtelemente 12 und 13 nicht dargestellt, wodurch die Ausbildung der Nuten 22 und 23 sowie der Anpressflächen 24 und 25 besser sichtbar wird. Diese Anordnung und die Ausrichtung der Presskräfte 14, 15 auf die hier nicht gezeigten Abdichtelemente 12 und 13 sorgen dafür, dass die Abdichtungen auch bei verschiedenen mechanischen Belastungen wirksam sind, was die Zuverlässigkeit des Akkugehäuses 4 erhöht.

Die Pfeile in den Figuren 5 und 6 verdeutlichen die Richtung der Presskräfte 14 und 15, die auf die Abdichtelemente 12 und 13 wirken. Die erste Presskraft 14 wird in Radialrichtung 28 ausgeübt, wie durch den entsprechenden Pfeil angezeigt. Diese Ausrichtung der ersten Presskraft 14 sorgt dafür, dass das Abdichtelement 12 fest in der ersten Nut 22 gehalten wird und eine effektive Abdichtung gewährleistet ist. Die zweite Presskraft 15 wirkt in Axialrichtung 27, was durch den Pfeil verdeutlicht wird. Diese Ausrichtung der Presskraft 15 gewährleistet, dass das zweite Abdichtelement 13 sicher in der zweiten Nut 23 fixiert wird, was eine zuverlässige Abdichtung ermöglicht.

Des Weiteren sind Normalen der Anpressflächen 24 und 25 der Ausführungsbeispiele der Figuren 5 und 6 parallel zur Radialrichtung 28 bzw. parallel zur Axialrichtung 27 orientiert. Die beiden Normalen sind hier nicht eingezeichnet. Die Normale der ersten Anpressfläche 24 ist im hier gezeigten Ausführungsbeispiel parallel zur Radialrichtung 28 ausgerichtet. Diese Ausrichtung bedeutet, dass die Presskraft 14, die auf das erste Abdichtelement 12 wirkt, in Radialrichtung 28 ausgeübt wird. Die Normale der zweiten Anpressfläche 25 hingegen ist im hier gezeigten Ausführungsbeispiel parallel zur Axialrichtung 28 orientiert.

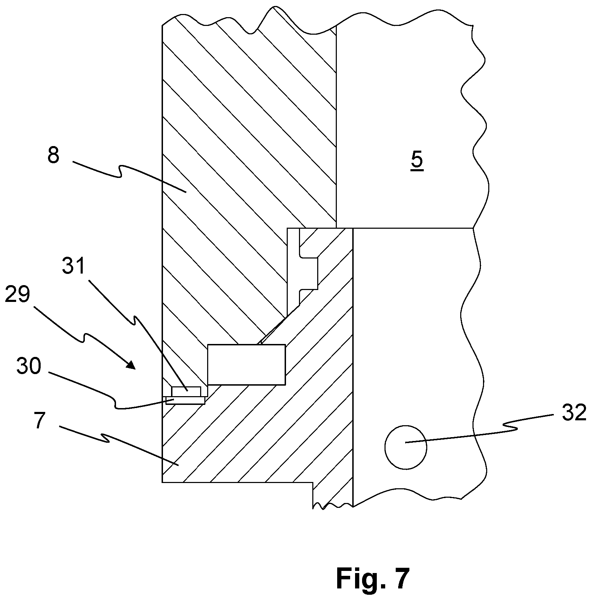

Das in Figur 7 dargestellte Ausführungsbeispiel zeigt eine Schnittansicht eines Teils der Schale 7 sowie des Deckels 8 eines Elektrogeräts 1.

Das in Figur 7 gezeigte Ausführungsbeispiel umfasst eine Hallsensoreinheit 29, die im Bereich des Akkugehäuses 4 angeordnet sein kann. Mit Hilfe der Hallsensoreinheit 29 kann der Verschlusszustand des Akkugehäuses 4 ermittelt werden. Diese Hallsensoreinheit 29 umfasst gemäß dem vorliegenden Ausführungsbeispiel einen Hallsensor 30, der in der Figur 7 sichtbar ist. Der Hallsensor 30 ist so positioniert, dass er direkt an der Verbindungsstelle zwischen der Schale 7 und dem Deckel 8 liegt. Die Anordnung des Hallsensors 30 ermöglicht es, das ordnungsgemäße Verschließen des Akkugehäuses 4 zu überwachen. Das Akkugehäuse 4, welches den Akku 6 umschließt, ist in der Figur 7 nicht explizit dargestellt, jedoch Teil des Gesamtsystems.

Wenn der Deckel 8 vollständig geschlossen ist, erkennt der Hallsensor 30 die Position und kann somit das ordnungsgemäße Verschließen des Akkugehäuses 4 bestätigen. Dies ist besonders wichtig für die Sicherheit und Funktionsfähigkeit des Elektrogeräts 1, da nur ein korrekt verschlossenes Akkugehäuse 4 den Innenraum 5 und den Akku 6 zuverlässig schützen kann.

Des Weiteren kann gemäß dem vorliegenden Ausführungsbeispiel die Hallsensoreinheit 29 zumindest ein Magnetelement 31 umfassen, das mit dem Hallsensor 30 zusammenwirken kann. Der Hallsensor 30 kann hierbei das Magnetfeld des Magnetelements 31 erfassen, so dass dadurch das sichere Verschließen des Akkugehäuses 4 ermittelt werden kann. Das Magnetelement 31 kann mit dem Hallsensor 30 in Verbindung gebracht werden und dient dazu, das Magnetfeld zu erzeugen, welches der Hallsensor 30 detektiert. Die genaue Positionierung des Magnetelements 31 ermöglicht eine präzise Erkennung der Verschlussposition des Deckels 8.

Zusätzlich oder alternativ ist es vorteilhaft, dass das Elektrogerät 1 gemäß Figur 7 einen Feuchtigkeitssensor 32 umfasst. Dieser Feuchtigkeitssensor 32 ist im Innenraum 5 angeordnet und ermöglicht die Ermittlung der Feuchtigkeit innerhalb des Innenraums 5.

Der Feuchtigkeitssensor 32 detektiert Feuchtigkeit im Innenraum 5 und sendet entsprechende Signale, um potenzielle Feuchtigkeitseintritte oder Kondensationsprobleme frühzeitig zu erkennen. Diese Funktion ist besonders vorteilhaft, um die Elektronik und/oder den Akku 6 im Inneren des Elektrogeräts 1 bzw. im Innenraum 5 vor Feuchtigkeitsschäden zu schützen. Die Integration des Feuchtigkeitssensors 32 ermöglicht eine kontinuierliche Überwachung der Umgebungsbedingungen im Innenraum 5 und trägt zur Langzeitzuverlässigkeit des Elektrogeräts 1 bei.

### Bezugszeichenliste

- 1: Elektrogerät
- 2: Koppelbereich
- 3: Arbeitseinheit
- 4: Akkugehäuse
- 5: Innenraum
- 6: Akku
- 7: Schale
- 8: Deckel
- 9: Abdichtvorrichtung
- 10: erste Abdichtanordnung
- 11: zweite Abdichtanordnung
- 12: erstes Abdichtelement
- 13: zweites Abdichtelement
- 14: erste Presskraft
- 15: zweite Presskraft
- 16: Stiel
- 17: erstes Stielende
- 18: zweites Stielende
- 19: Aktorgehäuse
- 20: Drehlager
- 21: Verschlusseinheit
- 22: erste Nut
- 23: zweite Nut
- 24: erste Anpressfläche
- 25: zweite Anpressfläche
- 26: Übergangsfläche
- 27: Axialrichtung
- 28: Radialrichtung
- 29: Hallsensoreinheit
- 30: Hallsensor
- 31: Magnetelement
- 32: Feuchtigkeitssensor

## Patentansprüche

1. Elektrogerät (1), insbesondere Reinigungseinheit, vorzugsweise Poolreiniger,
mit zumindest einem Akkugehäuse (4), das einen Innenraum (5) zur Aufnahme zumindest eines Akkus (6) umgibt,
wobei das Akkugehäuse (4) eine Schale (7) und einen Deckel (8) umfasst, wobei der Deckel (8) zumindest teilweise von der Schale (7) getrennt werden kann, und
mit zumindest einer zwischen dem Deckel (8) und Schale (7) angeordneten Abdichtvorrichtung (9), mittels der der Innenraum (5) abgedichtet werden kann,
wobei die Abdichtvorrichtung (9) zumindest eine erste Abdichtanordnung (10) und eine zweite Abdichtanordnung (11) umfasst, wobei die erste und die zweite Abdichtanordnung (10, 11) derart ausgebildet sind, dass ein erstes Abdichtelement (12) mit einer ersten Presskraft (14) und ein zweites Abdichtelement (13) mit einer zweiten Presskraft (15) beaufschlagt werden kann,
**dadurch gekennzeichnet,**
**dass** in einem bestimmungsgemäßen geschlossenen Zustand des Ackugehäuses (4) die beiden Presskräfte (14, 15) in zueinander verschiedene Richtungen orientiert sind.

2. Elektrogerät nach dem vorherigen Anspruch, **dadurch gekennzeichnet, dass** die beiden Presskräfte (14, 15) quer, insbesondere senkrecht, zueinander orientiert sind und/oder
dass eine der beiden Presskräfte (14, 15) in einer Axialrichtung des Elektrogeräts (1) orientiert ist und/oder
dass die andere der beiden Presskräfte (14, 15) in einer Radialrichtung des Elektrogeräts (1) orientiert ist und/oder
dass die Presskraft (14, 15) der der Schale (7) zugewandten Abdichtanordnung (10, 11) in Axialrichtung (27) orientiert ist und/oder
dass die Presskraft (14, 15) der dem Deckel (8) zugewandten Abdichtanordnung (10, 11) in Radialrichtung (28) orientiert ist.

3. Elektrogerät nach einem oder mehreren der vorherigen Ansprüche,
**dadurch gekennzeichnet, dass** die erste Abdichtanordnung (10) zur Aufnahme des ersten Abdichtelements (12) eine erste Nut (22) umfasst und/oder
dass die zweite Abdichtanordnung (11) zur Aufnahme des ersten Abdichtelements (12) eine zweite Nut (23) umfasst.

4. Elektrogerät nach einem oder mehreren der vorherigen Ansprüche,
**dadurch gekennzeichnet, dass** die erste Abdichtanordnung (10) eine erste Anpressfläche (24) umfasst, mittels der die erste Presskraft (14) auf das erste Abdichtelement (12) ausgebildet werden kann, und/oder
dass die zweite Abdichtanordnung (11) eine zweite Anpressfläche (25) umfasst, mittels der die zweite Presskraft (15) auf das zweite Abdichtelement (13) ausgebildet werden kann.

5. Elektrogerät nach einem oder mehreren der vorherigen Ansprüche,
**dadurch gekennzeichnet, dass** die erste und/oder die zweite Nut (22, 23) in der Schale (7) oder im Deckel (8) angeordnet ist und/oder dass die erste und/oder die zweite Anpressfläche (24, 25) in der Schale (7) oder im Deckel (8) angeordnet ist.

6. Elektrogerät nach einem oder mehreren der vorherigen Ansprüche,
**dadurch gekennzeichnet, dass** sich die erste und/oder die zweite Nut (22, 23) und/oder die erste und/oder zweite Anpressfläche (24, 25) in einer Umfangsrichtung zumindest teilweise, insbesondere vollständig, um die Schale (7) und/oder den Deckel (8) herum erstreckt.

7. Elektrogerät nach einem oder mehreren der vorherigen Ansprüche,
**dadurch gekennzeichnet, dass** die beiden Anpressflächen (24, 25) quer, insbesondere senkrecht, zueinander orientiert sind, so dass jede der beiden Anpressflächen (24, 25) eine Presskraft (14, 15) ausbildet, die zueinander verschiedene Richtungen aufweisen und/oder die quer, insbesondere senkrecht, zueinander orientiert sind.

8. Elektrogerät nach einem oder mehreren der vorherigen Ansprüche, **dadurch gekennzeichnet, dass** eine Normale einer der beiden Anpressflächen (24, 25) parallel zur Axialrichtung (27) orientiert ist und/oder
dass eine Normale der anderen Anpressfläche (24, 25) parallel zur Radialrichtung (28) orientiert ist.

9. Elektrogerät nach einem oder mehreren der vorherigen Ansprüche,
**dadurch gekennzeichnet, dass** die erste Abdichtanordnung (10) und die zweite Abdichtanordnung (11) in Axialrichtung (27) und/oder in Radialrichtung (28) zueinander versetzt angeordnet sind.

10. Elektrogerät nach einem oder mehreren der vorherigen Ansprüche,
**dadurch gekennzeichnet, dass** zwischen der ersten und der zweiten Abdichtanordnung (10, 11) zumindest eine Übergangsfläche (26) angeordnet ist, wobei die Übergangsfläche (26) vorzugsweise schräg zur Axial- und/oder Radialrichtung (27, 28) angeordnet ist.

11. Elektrogerät nach einem oder mehreren der vorherigen Ansprüche,
**dadurch gekennzeichnet, dass** in der ersten Nut (22) das erste Abdichtelement (12) angeordnet ist und/oder
dass in der zweiten Nut (23) das zweite Abdichtelement (13) angeordnet ist und/oder
dass das erste und/oder zweiten Abdichtelement (12, 13) ein Dichtring ist.

12. Elektrogerät nach einem oder mehreren der vorherigen Ansprüche,
**dadurch gekennzeichnet, dass** im Akkugehäuse (4) zumindest ein Kontaktbereich angeordnet ist, in dem der zumindest eine Akku (6) angeschlossen werden kann, und/oder
dass das Elektrogerät (1) zumindest einen Koppelbereich (2) umfasst, an dem eine Arbeitseinheit (3), insbesondere ein Reinigungskopf, angekoppelt werden kann.

13. Elektrogerät nach einem oder mehreren der vorherigen Ansprüche,
**dadurch gekennzeichnet, dass** das Elektrogerät (1) eine Hallsensoreinheit (29) umfasst, mittels dem ein Verschließen des Ackugehäuses (4) ermittelt werden kann.

14. Elektrogerät nach einem oder mehreren der vorherigen Ansprüche,
**dadurch gekennzeichnet, dass** das Elektrogerät (1) einen Feuchtigkeitssensor (32) umfasst, mittels dem Feuchtigkeit im Innenraum (5) ermittelt werden kann.

15. Elektrogerät nach einem oder mehreren der vorherigen Ansprüche,
**dadurch gekennzeichnet, dass** der Deckel (8) und/oder die Schale (7) optisch transparent sind und/oder
dass das Elektrogerät (1) eine optische und/oder akustische Ausgabeeinheit umfasst, mittels dem ein Akkuzustand des zumindest einen Ackus (6) ausgegeben werden kann, welches vorzugsweise mittels zumindest einem Bedienelement aktiviert werden kann.
